# EUROPÄISCHE PATENTSCHRIFT

(11) **EP 0 462 400 B1**
(45) Veröffentlichungstag und Bekanntmachung des Hinweises auf die Patenterteilung: **25.08.1993**
(21) Anmeldenummer: 91107909.3
(22) Anmeldetag: 16.05.1991
(51) Int. Cl.: B60K 23/08

(54) **Vorrichtung zum Betätigen von Kupplungen eines Allrad-Antriebsstranges**
Device for actuating the couplings of a 4-wheel drive power train
Dispositif de commande pour l'embrayage d'un mécanisme de propulsion à quatre roues motrices

(30) Priorität: 21.06.1990 DE 4019763
(43) Veröffentlichungstag der Anmeldung: 27.12.1991
(73) Patentinhaber: Dr.Ing.h.c. F. Porsche Aktiengesellschaft, 70435 Stuttgart (DE)
(72) Erfinder: Müller, Robert, W-7251 Mönsheim (DE)

(56) Entgegenhaltungen:
- EP-A- 0 076 148
- EP-A- 0 236 564
- DE-A- 3 212 495
- DE-A- 3 446 460
- PATENT ABSTRACTS OF JAPAN vol. 10, no. 265 (M-515)(2321) 10. September 1986 & JP-A-61 89 126 (NISSAN MOTOR CO. LTD. ) 7. Mai 1986

## Beschreibung

Die Erfindung betrifft einen Allrad-Antriebsstrang eines Kraftfahrzeugs nach dem Oberbegriff des Anspruchs 1.

Ein derartiger Allrad-Antriebsstrang ist aus EP-A-0 236 564 bekannt. In den Antriebsstrang sind zwei Kupplungen eingesetzt. Die erste Kupplung dient als Trennkupplung, die zweite Kupplung als Sperrkupplung zum Blockieren eines Allrad-Sperrsystems.

Es ist die Aufgabe der Erfindung, eine Kupplungsbetätigung für einen gattungsgemäßen Allradantrieb zu schaffen, die wenig Bauraum erfordert und auch bei Ausfall oder Störung der elektronischen Allradsteuerung einen sicheren Betrieb des Kraftfahrzeugs ermöglicht.

Zur Lösung dieser Aufgabe dienen die kennzeichnenden Merkmale des Anspruchs 1.

Da eine Sperrkupplung vorgesehen ist, die zum Blockieren des Sperrsystems für die Vorderachse dienen kann, und die durch eine Feder in Schließstellung gehalten ist, wird die Sperrkupplung erst durch Aufbringen von Hydraulikdruck öffenbar. Die Vorderachse ist somit auch bei Ausfall der Allradfunktion über eine rein mechanische Verbindung angetrieben. In diesem Fall ist die Trennkupplung zur Hinterachse offen, der Antrieb zur Hinterachse unterbunden. Das ist eine wichtige Voraussetzung dafür, daß ein ABS-System wirksam werden kann und auch beim Bremsen ein stabiler Fahrbetrieb möglich ist.

Als hydraulische Betätigungsvorrichtung sind zwei Hydraulikkolben vorgesehen, die zueinander konzentrisch sind und ineinander abgedichtet geführt sind, so daß sich eine äußerst raumsparende Bauweise ergibt.

Ein Ausführungsbeispiel der Erfindung ist in den Zeichnungen dargestellt und wird nachfolgend erläutert.

Es zeigen:

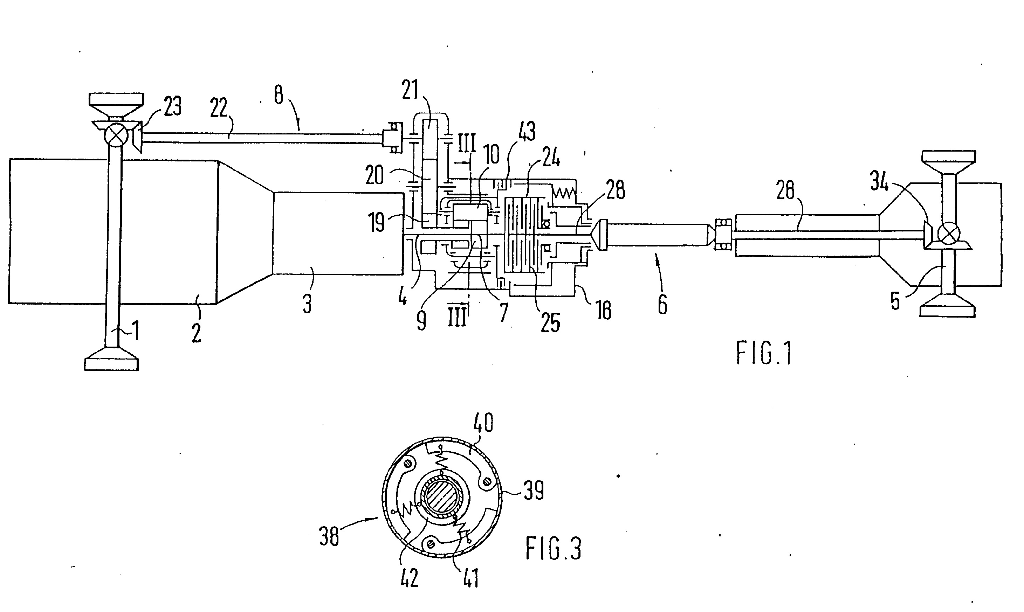

- Fig. 1: Allrad- Antriebsschema eines Kraftfahrzeugs,

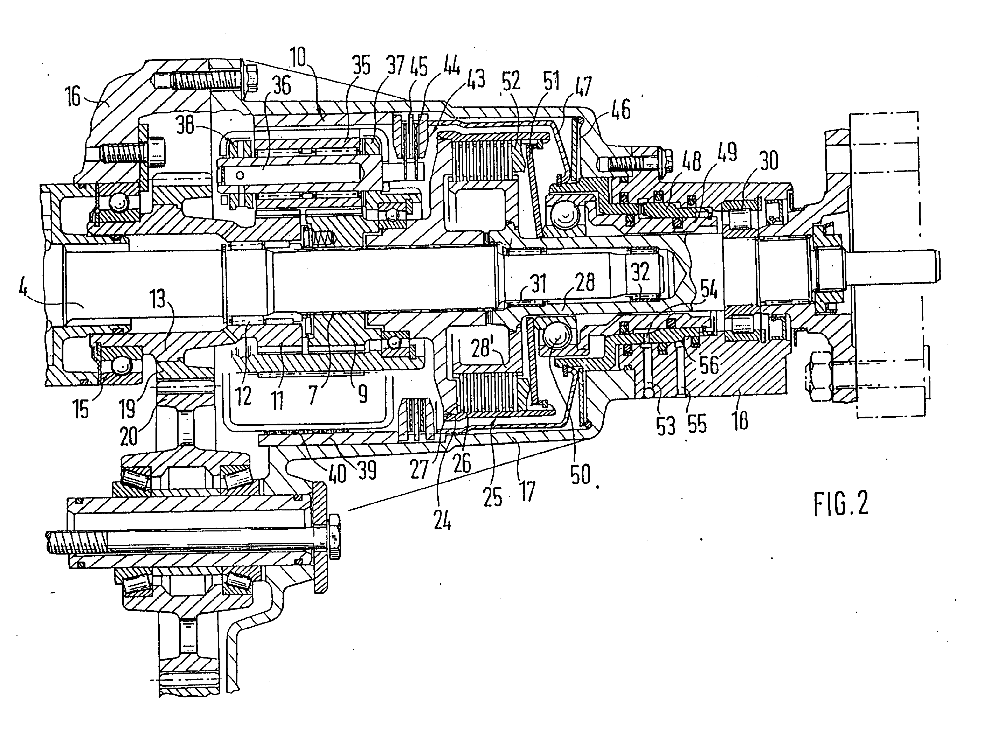

- Fig. 2: Längsschnitt durch die Antriebsstränge zur Vorderachse und Hinterachse mit hydraulischer Betätigungsvorrichtung,
- Fig. 3: Fliehkraftbremse des Planetenrad- Sperrsystems.

Ein nahe der Vorderachse 1 an einem Kraftfahrzeug angeordneter Motor 2 treibt über ein Gangschaltgetriebe 3 und eine Antriebswelle 4 einen zur Hinterachse 5 führenden ersten Antriebsstrang 6 und einen an einer Abzweigstelle 7 an ihn angeschlossenen Antriebsstrang 8 zur Vorderachse 1 an. Als Abzweigstelle 7 dient eine Kerbzahnverbindung, mit der ein Eingangssonnenrad 9 eines Planetenrad-Sperrsystems 10 auf der Antriebswelle 4 drehfest ist. Koaxial zum Eingangssonnenrad 9 ist neben ihm ein Ausgangssonnenrad 11 etwas geringerer Zähnezahl auf der Antriebswelle 4 mit einem Nadellager 12 gelagert. Das Ausgangssonnenrad 11 ist einstückig mit einer hohlen Ausgangswelle 13 ausgebildet, die an ihrer Außenseite mit einem Kugellager 15 in einem vorderen Lagergehäuse 16 gelagert ist. Das Lagergehäuse 16, ein Sperrengehäuse 17 und ein Hydraulikgehäuse 18 bilden zusammen ein die Allrad-Antriebsvorrichtung umschließendes Gehäuse, wobei die drei Gehäuseteile 16, 17, 18 zueinander zentriert und abgedichtet aneinander befestigt sind. Etwa mittig zwischen dem Nadellager 12 und dem Kugellager 15 ist auf der Ausgangswelle 13 ein Zahnrad 19 befestigt, das über ein Zwischenrad 20 ein Zahnrad 21 einer Abtriebswelle 22 antreibt, die über einen Kegelrad-Winkeltrieb 23 die Vorderachse 1 treibt.

An dem hinter der Abzweigstelle 7 gelegenen Wellenstück der Antriebswelle 4 ist mittels einer Kerbzahnverbindung ein Kupplungsgehäuse 24 drehfest, das eine Trennkupplung 25 für den ersten Antriebsstrang 6 umschließt. Im Kupplungsgehäuse 24 sind Außenlamellen 26 drehfest und längsverschieblich. Sie wirken mit Innenlamellen 27 zusammen, die auf einem mit der Abtriebswelle 28 zur Hinterachse 5 verbundenen Lamellenträger 28' drehfest sind. Die Abtriebswelle 28 ist hohl ausgebildet und in Lagern 29, 30 des Hydraulikgehäuses 18 gelagert. In der Abtriebswelle 28 ist die Antriebswelle 4 mit zwei Nadellagern 31, 32 gelagert. Die Abtriebswelle 28 treibt über eine Gelenkwelle 33 und einen Kegelrad- Winkeltrieb 34 die Hinterachse 5 an.

Mit dem Eingangssonnenrad 9 und dem Ausgangssonnenrad 11 stehen drei Planetenräder 35 in Eingriff, die an Lagerbolzen 36 des Planetenträgers 37 gelagert sind. An den einen Enden der Lagerbolzen 36 ist eine Fliehkraftbremse 38 angebracht, die in Fig. 3 näher dargestellt ist. An eine feststehende Bremstrommel 39 des Sperrengehäuses 17 werden die mit dem Planetenträger 37 rotierenden, auf den Lagerbolzen 36 schwenkbaren Bremsbacken 40 durch Fliehkraft angedrückt. Der Fliehkraft entgegen wirken Zugfedern 41, mit denen die Bremsbacken 40 an eine zentrale, hohl gebohrte, mit dem Planetenträger 37 umlaufenden Bremswelle 42 angehängt sind.

Das Eingangssonnenrad hat eine Zähnezahl Z = 47, das Ausgangssonnenrad eine Zähnezahl Z = 44. Die Übersetzung vom Eingangssonnenrad zum Planetenträger beträgt 15 2/3 : 1. Tritt ein Drehzahlunterschied zwischen der Antriebswelle 4 und der Ausgangswelle 13 auf, so werden der Planetenträger 37 und die Bremsbacken 40 mit der Übersetzung 15 2/3 zur Differenzdrehzahl in Umdrehung versetzt. Die Bremsbacken 40 bauen ein mit der Drehzahldifferenz proportional ansteigendes Sperrmoment auf.

An den anderen Enden der Lagerbolzen 36 befindet sich eine Sperrkupplung 43, um bei bestimmten Fahrsituationen das Umlaufen des Planetenträgers 37 zu verhindern und eine starre Antriebsverbindung zwischen Vorderachse 1 und Hinterachse 5 zu realisieren. An den Lagerbolzen 36 sind Innenlamellen 44 befestigt; sie wirken mit Außenlamellen 45 des Sperrengehäuses 17 zusammen. Durch eine Tellerfeder 46, die sich zwischen dem Hydraulikgehäuse 18 und einer Betätigungsglocke 47 abstützt, wird die Sperrkupplung 43 geschlossen. Geöffnet wird sie entgegen der Kraft der Tellerfeder 46 mit einem im Hydraulikgehäuse 18 längsgeführten, äußeren Hydraulikkolben 48. Ein in ihm geführter, innerer Hydraulikkolben 49 betätigt über ein Einrücklager 50 eine Tellerfeder 51 und ein Druckstück 52 die Trennkupplung 25. Die Sperrkupplung 43 ist drucklos durch Federkraft geschlossen, die Trennkupplung 25 ist drucklos offen.

Bei normalem Betriebszustand wird über den Druckanschluß 53 und radiale Kanäle 54 der innere Hydraulikkolben 49 nach links, der äußere Hydraulikkolben 48 nach rechts verschoben, so daß die Trennkupplung 25 geschlossen und somit der Kraftfluß zur Hinterachse hergestellt wird. Gleichzeitig wird mit dem äußeren Hydraulikkolben 48 die Sperrkupplung 43 gelöst und somit der Planetenträger 35 des Allrad-Sperrsystems freigegeben.

Bei ABS-Betrieb sowie beim Abschleppen und bei Leistungsprüfungen des Kraftfahrzeugs ist der Druckanschluß 53 drucklos, die Trennkupplung 25 ist offen, die Sperrkupplung 43 ist geschlossen. Somit ist die Hinterachse 5 abgetrennt, die Vorderachse 1 ist starr an den Motor 2 gekoppelt.

Wird gleichzeitig mit der Druckbeaufschlagung des Druckanschlusses 53 dem Druckanschluß 55 derselbe Druck zugeführt, so wird der äußere Hydraulikkolben 48 über seine größere äußere Angriffsfläche 56 nach links verschoben. Die Sperrkupplung 43 wird geschlossen, ohne daß die Hinterachse 5 abgekoppelt wird. Hier liegt starrer Antrieb zur Vorderachse und zur Hinterachse vor.

## Patentansprüche

1. Allrad-Antriebsstrang eines Kraftfahrzeugs mit zwei Kupplungen, wobei die erste Kupplung als Trennkupplung (25) in den Antriebsstrang zu einer ersten Fahrzeugachse (5), die zweite Kupplung als Sperrkupplung (43) zum Blockieren eines Sperrsystems (10) dient, über das die zweite Fahrzeugachse (1) abhängig von der Drehzahldifferenz zwischen den beiden Fahrzeugachsen (1, 5) zuschaltbar ist, und wobei mit einem ersten Hydraulikkolben (49) die Trennkupplung (25) entgegen der Kraft einer Feder (51) schließbar, mit einem zweiten Hydraulikkolben (48) die Sperrkupplung (43) entgegen der Kraft einer Feder (46) öffenbar ist, **dadurch gekennzeichnet**, daß die Hydraulikkolben (48, 49) zueinander konzentrisch angeordnet und in einem Hydraulikgehäuse (18) abgedichtet geführt sind.

2. Allrad-Antriebsstrang nach Anspruch 1, **dadurch gekennzeichnet**, daß der erste, innere Hydraulikolben (49) in dem zweiten, äußeren Hydraulikkolben (48) abgedichtet geführt ist.

3. Allrad-Antriebsstrang nach Anspruch 2, **dadurch gekennzeichnet**, daß der innere Hydraulikkolben (49) durch radiale Kanäle (54) im Mantel des äußeren Hydraulikkolbens (48) hindurch mit Hydraulikdruck beaufschlagbar ist.

4. Allrad-Antriebsstrang nach Anspruch 2, **dadurch gekennzeichnet**, daß der äußere Hydraulikkolben (48) an einer Schulter des inneren Hydraulikkolbens (49) anlegbar ist, so daß bei Druckbeaufschlagung des äußeren Hydraulikkolbens (48) zugleich der innere Hydraulikkolben (49) betätigbar ist.

5. Allrad-Antriebsstrang nach einem der Ansprüche 1 bis 4, **dadurch gekennzeichnet**, daß der innere Hydraulikkolben (49) über ein auf der Abtriebswelle (22) verschiebliches Einrücklager (50) und die an einem Kupplungsgehäuse (24) abgestützte Tellerfeder (51) auf die Trennkupplung (25) einwirkt.

6. Allrad-Antriebsstrang nach Anspruch 5, **dadurch gekennzeichnet**, daß der Außenrand der Tellerfeder (5) zwischen einem Druckstück (52) und einem am Kupplungsgehäuse (24) anliegenden O-Ring gehalten ist.

## Claims

1. An all-wheel drive train of a motor vehicle with two clutches, wherein the first clutch acts as a separating clutch (25) in the drive train to a first axle (5) of the vehicle, and the second clutch acts as a locking clutch (43) for blocking a locking system (10) by way of which the second axle (1) of the vehicle is engageable as a function of the difference in rotational speed between the two axles (1, 5) of the vehicle, and wherein the separating clutch (25) is closable by a first hydraulic piston (49) against the force of a spring (51) and openable by a second hydraulic piston (48) against the force of a spring (46), **characterized in that** the hydraulic pistons (48, 49) are arranged concentrically with each other and are guided in a sealed manner in an hydraulic housing (18).

2. An all-wheel drive train according to Claim 1, **characterized in that** the first, inner hydraulic piston (49) is guided in a sealed manner in the second, outer hydraulic piston (48).

3. An all-wheel drive train according to Claim 2, **characterized in that** the inner hydraulic piston (49) can be acted upon by hydraulic pressure through radial ducts (54) in the jacket of the outer hydraulic piston (48).

4. An all-wheel drive train according to Claim 2, **characterized in that** the outer hydraulic piston (48) can be placed on a step of the inner hydraulic piston (49), so that when the outer hydraulic piston (48) is acted upon by pressure the inner hydraulic piston (49) can be actuated at the same time.

5. An all-wheel drive train according to one of Claims 1 to 4, **characterized in that** the inner hydraulic piston (49) acts upon the separating clutch (25) by way of an engaging bearing (50), displaceable on the driven shaft (22), and the cup spring (51), supported on a clutch housing (24).

6. An all-wheel drive train according to Claim 5, **characterized in that** the outer edge of the cup spring (5) [*sic*] is held between a spacer member (52) and an O-ring resting on the clutch housing (24).

## Revendications

1. Chaîne de transmission intégrale d'un véhicule automobile comportant deux accouplements, le premier servant d'accouplement de séparation (25) dans la chaîne de transmission vers un premier essieu (5) du véhicule, le second servant d'accouplement de blocage (43) pour bloquer un système de blocage (10), par lequel le second essieu (1) du véhicule peut être commandé en fonction de la différence de vitesse de rotation entre les deux essieux (1, 5), et dans laquelle l'accouplement de séparation (25) peut être fermé, avec un premier piston hydraulique (49), à l'encontre de la force d'un ressort (51), et l'accouplement de blocage (43) peut être ouvert, avec un second piston hydraulique (48), à l'encontre de la force d'un ressort (46), caractérisée en ce que les pistons hydrauliques (48, 49) sont montés concentriquement entre eux et sont guidés, de manière étanche, dans un boîtier hydraulique (18).

2. Chaîne de transmission intégrale selon la revendication 1, caractérisée en ce que le premier piston hydraulique (49) intérieur est guidé, de manière étanche, dans le second piston hydraulique (48) extérieur.

3. Chaîne de transmission intégrale selon la revendication 2, caractérisée en ce que le piston hydraulique (49) intérieur est alimenté en pression hydraulique par des canaux (54) radiaux pratiqués dans l'enveloppe du piston hydraulique (48) extérieur.

4. Chaîne de transmission intégrale selon la revendication 2, caractérisée en ce que le piston hydraulique (48) extérieur peut s'appliquer contre un épaulement du piston hydraulique (49) intérieur, de sorte que lorsque le piston hydraulique (48) extérieur est alimenté en pression, le piston hydraulique (49) intérieur peut être actionné en même temps.

5. Chaîne de transmission intégrale selon l'une des revendications 1 à 4, caractérisée en ce que le piston hydraulique (49) intérieur agit sur l'accouplement de séparation (25), par un palier de déplacement (50), déplaçable sur l'arbre d'entraînement (22) et le ressort Belleville (51), prenant appui sur un carter d'embrayage (24).

6. Chaîne de transmission intégrale selon la revendication 5, caractérisée en ce que le bord extérieur du ressort Belleville (5) est maintenu entre une pièce de pression (52) et un joint torique s'appliquant contre le carter d'embrayage (24).
